**Europäisches Patentamt**

**European Patent Office**

**Office européen des brevets**

(11) Veröffentlichungsnummer: **0 304 394**
**A2**

# (12) EUROPÄISCHE PATENTANMELDUNG

(21) Anmeldenummer: **88730173.7**

(22) Anmeldetag: **04.08.88**

(51) Int. Cl.⁴: **G 01 N 29/04**

(30) Priorität: **21.08.87 DE 3728369**

(43) Veröffentlichungstag der Anmeldung:
**22.02.89   Patentblatt   89/08**

(84) Benannte Vertragsstaaten:
**AT CH DE FR GB LI NL SE**

(71) Anmelder: **Siemens Aktiengesellschaft Berlin und München**
**Wittelsbacherplatz 2**
**D-8000 München 2  (DE)**

(72) Erfinder: **Hildmann, Ingo**
**Liviusstrasse 8**
**D-1000 Berlin 42  (DE)**

**Voigt, Wilhelm**
**Wilhelmsaue 34**
**D-1000 Berlin 31  (DE)**

(54) **Verfahren zur Feststellung von Rissen in einer Welle mittels Ultraschall-Impulsechoverfahren und Vorrichtung zu seiner Durchführung.**

(57) Zur zerstörungsfreie Prüfung von Wellen wird ein Prüfkopf (4) mit einem Vorsatzkeil an der Stirnfläche (2) der Welle (1) angekoppelt, der Ultraschallimpulse bestimmter Frequenz aussendet. Der Prüfkopf (4) wird mit Hilfe einer mechanischen Vorrichtung vor der Stirnfläche (2) bewegt. Das Verfahren soll auch bei langen Wellen zuverlässig und reproduzierbar eine sichere Erkennung von an Wellenumfang vorhandenen Rissen ermöglichen.

Dazu gibt der Prüfkopf (4) Schallimpulse im Bereich von 4 - 8 MHz ab und wird mittels der Vorrichtung in einem radialen Abstand (7) zur Mittelachse (6) auf der Stirnfläche (2) der Welle (1) aufgesetzt und im Verlauf der Messungen in drei Freiheitsgraden bewegt, nämlich entlang eines Radius, entlang eines Kreises (11) und um die Achse des Prüfkopfhalters gedreht.

Das Verfahren und die Vorrichtung werden zur Prüfung von langen Turbinenwellen in eingebautem Zustand von der generatorseitigen Stirnfläche her eingesetzt.

FIG 1

EP 0 304 394 A2

Beschreibung

**Verfahren zur Feststellung von Rissen in einer Welle mittels Ultraschall-Impulsechoverfahren und Vorrichtung zu seiner Durchführung.**

Die Erfindung bezieht sich auf ein Verfahren zur Feststellung von Rissen in einer Welle mittels Ultraschall-Impulsechoverfahren, bei dem der insbesondere mit einem Vorsatzkeil versehene Prüfkopf an der Stirnfläche der Welle angekoppelt ist, auf dieser bewegt wird, insbesondere mit Hilfe einer mechanischen Vorrichtung, und Ultraschallimpulse bestimmter Frequenz aussendet und bei dem weiterhin die reflektierten Schallechos von einem im Prüfkopf enthaltenen Schallempfänger erfaßt und durch eine Auswerteeinrichtung aufgezeichnet werden, sowie eine Vorrichtung zur Durchführung des Verfahrens.

Ultraschall-Impulsechoverfahren der eingangs beschriebenen Art sind aus dem Lehrbuch: Josef Krautkrämer, Herbert Krautkrämer "Werkstoffprüfung mit Ultraschall", Springer-Verlag, 5. Auflage, insbesondere aus den Seiten 176 - 179, 349 und 382 - 389 bekannt. Es ist üblich, für die bekannten Impulsechoverfahren sowohl Transversal- als auch Longitudinalschallwellen auszunutzen. Entsprechend wird der die Ultraschallwellen im Frequenzbereich von 2 bis 5 MHz abgebende Prüfkopf bei Wellen an der Stirnfläche oder auf der Mantelfläche aufgesetzt und angekoppelt. Vor dem Prüfkopf angeordnete Vorsatzkeile erlauben außerdem eine winklige Ausrichtung des Schallbündels. Die Wahl der Ankoppelstelle bzw. der Aufsatzfläche für den Prüfkopf ist dabei sowohl von der geometrische Beschaffenheit als auch vom Material des Prüflings abhängig.

Bei kürzeren Wellen, wie z. B. Radsatzwellen der Eisenbahn, ist die Einschallung von der Stirnseite her üblich. Bei längeren Wellen, wie Turbinenwellen, werden dagegen die Prüfköpfe ent lang der Mantelfläche geführt, insbesondere mit Hilfe mechanischer Vorrichtungen. Dies setzt aber voraus, daß diese Mantelflächen zugänglich sind. Da aber auf einer Turbinenwelle Radscheiben mit den Schaufeln montiert sind, die zu ihrer Befestigung Absätze auf der Welle erfordern, die dann während des Betriebes Ansatzpunkte für Risse bilden können, bereitet die zerstörungsfreie Werkstoffprüfung mit dem Impulsechoverfahren von der Mantelfläche aus einen großen Aufwand, weil die Welle für die Prüfung zumindest aus dem Ständer bzw. Gehäuse entfernt werden muß und bleibt auch unvollständig, da die Risse meist unter den Radscheiben liegen, es sei denn, man entfernt auch diese.

Der Erfindung liegt daher die Aufgabe zugrunde, ein Verfahren zur Feststellung von Rissen in einer Welle mittels Ultraschall-Impulsechoverfahren zu schaffen, das bei langen Wellen im eingebauten Zustand von der Stirnseite her möglich, zuverlässig und in einfacher Weise reproduzierbar ist und das eine sichere Erkennung von insbesondere am Wellenumfang vorhandenen Rissen oder Anrissen ermöglicht und auch eine zur Durchführung des Verfahrens geeignete mechanische Vorrichtung anzugeben.

Zur Lösung dieser Aufgabe ist ein Verfahren zur Feststellung von Rissen in einer Welle mittels Ultraschall-Impulsechoverfahren der eingangs beschriebenen Art gemäß der Erfindung dadurch gekennzeichnet, daß der Prüfkopf Schallimpulse hoher Frequenz im Bereich von 4 - 8 MHz abgibt und mit Hilfe der zur Mittelachse zentrierten mechanischen Vorrichtung in einem radialen Abstand zur Mittelachse der Welle aufgesetzt und im Verlauf der Messungen zumindest über einen Teil des Umfanges des durch den radialen Abstand des Prüfkopfes von der Mittelachse definierten Kreises verlagert wird.

Durch die Verwendung einer hohen Ultraschallfrequenz erhält man ein konzentriertes Schallbündel, das auch auf Entfernungen von einigen Metern noch deutliche Echos beim Auftreffen auf Risse erzeugt. Durch die von der Vorrichtung gelenkte gleichmäßige und stets reproduzierbare Verlagerung des Prüfkopfes über einen Radius bzw. Durchmesser und längs entsprechender Kreise um die Mittelachse der Welle gelingt es somit, aufeinander folgend in der Länge den gesamten Außenumfang der Welle von einer Stirnfläche her abzutasten. Dafür ist der Einbauzustand der Welle unerheblich, solange nur die eine Stirnfläche freiliegt. Das Freilegen einer Stirnfläche einer Welle ist aber wesentlich einfacher als der Ausbau der Welle nebst der auf ihr angeordneten Teile.

Die Genauigkeit des Verfahrens kann noch dadurch gesteigert werden, daß der Prüfkopf, der sich in einem Prüfkopfhalter befindet, in an sich bekannter Weise mit einem Vorsatzkeil versehen ist und dann um die Achse des Prüfkopfhalters gedreht wird. Dadurch erzielt man eine Schrägeinschallung, deren Schallbündel einen noch größeren Durchmesserbereich überstreifen kann. Außerdem lassen sich durch den Vorsatzkeil und das Schwenken des Prüfkopfes auch schrägliegende Risse klarer erfassen.

Die Vorrichtung zur Durchführung des Verfahrens ist dafür in zweckmäßiger Weise so auszuführen, daß die Verlagerung des Prüfkopfes längs eines Radius bzw. Durchmessers und längs eines Kreises um die Mittelachse der Welle, sowie um die Achse des Prüfkopfhalters unabhängig voneinander vorgenommen werden kann. Die Vorrichtung hat also entsprechend drei Freiheitsgrade. Die Bewegungen des Prüfkopfes in diesen drei Freiheitsgraden können entweder mit Hand oder jeweils mit separaten Stellmotoren durchgeführt werden.

Es ist besonders vorteilhaft, für die Durchführung des Verfahrens die generatorseitige Stirnfläche einer Turbinenwelle in eingebautem Zustand zu verwenden. Dazu braucht nur die Kupplung zum Generator gelöst und die Generatorwelle vorgezogen zu werden, wobei es sich empfiehlt, die auf der Stirnfläche der Welle bzw. auf der Stirnfläche eines als Kupplungsflansch dienenden, auf der Welle angeordneten Nabenkörpers vorhandenen Bohrungen zur Aufnahme der Kupplungsbolzen auch zur Befestigung der Vorrichtung auszunutzen.

Die Vorrichtung zur Durchführung des Verfahrens gemäß der Erfindung besteht als vorteilhafte Ausgestaltung der Erfindung aus einem Führungsring, der auf einem Tragkörper mit einstellbaren Befestigungsmitteln zur Welle angeordnet ist, und in dem zentrisch und drehbar ein zweiter Ring gelagert ist, der zwei in gleichem Abstand zum Mittelpunkt der Ringe liegende, zueinander parallel verlaufende Schienen trägt, auf denen längsbeweglich ein Schlitten angeordnet ist, der einen Halter mit dem darin liegenden, insbesondere mit einem Vorsatzkeil versehenen Prüfkopf trägt.

Durch die Einstellbarkeit der an der Welle anzubringenden Befestigungsmittel für den Tragkörper des Führungsrings ist dessen Durchmesser unabhängig vom Durchmesser der zu prüfenden Welle. Die Vorrichtung kann also an verschiedenen Wellen angebracht werden, deren Durchmesser in einem bestimmten Bereich variiert. Der Führungsring wird auf der Welle genau zentrisch zur Mittelachse befestigt. Er führt einen zweiten Ring, der in ihn drehbar gelagert ist. Dadurch ist bereits der eine Freiheitsgrad für die Bewegung des Prüfkopfes auf Kreisen um die Mittelachse der Welle gegeben, da die Mittelachse der Welle dem Mittelpunkt der Ringe der Vorrichtung entspricht. Der zweite drehbare Ring trägt den Schlitten mit dem Prüfkopf, der auf den parallel verlaufenden Schienen längs eines Radius bzw. Durchmessers bewegt werden kann. Die Halterung der Schienen ist auf einer Seite so ausgebildet, daß es möglich ist, den Schlitten bis an die Lauffläche des Führungsringes zu führen.

Zur Auslösung der Längsbewegung des Prüfkopfes gemeinsam mit dem Schlitten auf einem Radius bzw. Durchmesser empfiehlt es sich, den Schlitten mit einem Band zu verbinden, das eine von einem Stellmotor gedrehten Trommel umschlingt und auf ihr festgelegt ist und somit auf- und abwickelbar ist. Da dieses Band nur Zugkräfte übertragen kann, ist ferner eine Leitschiene vorzusehen, die einseitig mit dem Schlitten verbunden ist und deren Länge zumindest der gewünschten Längsbewegung des Schlittens entspricht, auf der die Enden des Bandes befestigt sind. Die von dem Band infolge der Drehung der Trommel ausgeübten Zugkräfte auf das eine oder das andere Ende der Leitschiene werden dann jeweils als Zug- bzw. Druckkraft auf den Schlitten übertragen und bewegen diesen auf den Schienen. Die Umsetzung der Drehbewegung der Trommel in eine geradlinige, hin- und hergehende Längsbewegung ist völlig spielfrei, wodurch die genaue Reproduzierbarkeit der Verlagerungen des Prüfkopfes garantiert ist. Es ist zweckmäßig, eine Spannmöglichkeit für das Band vorzusehen, damit stets eine gute Anlage auf der Trommel sichergestellt ist.

Es ist weiterhin vorteilhaft, den zweiten drehbaren Ring mit einer Außenverzahnung zu versehen, in die das Ritzel eines weiteren Stellmotors eingreift. Damit aber die Drehung dieses zweiten Ringes auch von Hand durchgeführt werden kann, wird mit Vorteil dieser Stellmotor so am Tragkörper des Führungsringes befestigt, daß er sich radial verschieben läßt, wodurch der Eingriff zwischen dem Ritzel und der Außenverzahnung aufgehoben werden kann, so daß die Drehung des zweiten Ringes dann in einfacher Weise per Hand erfolgen kann.

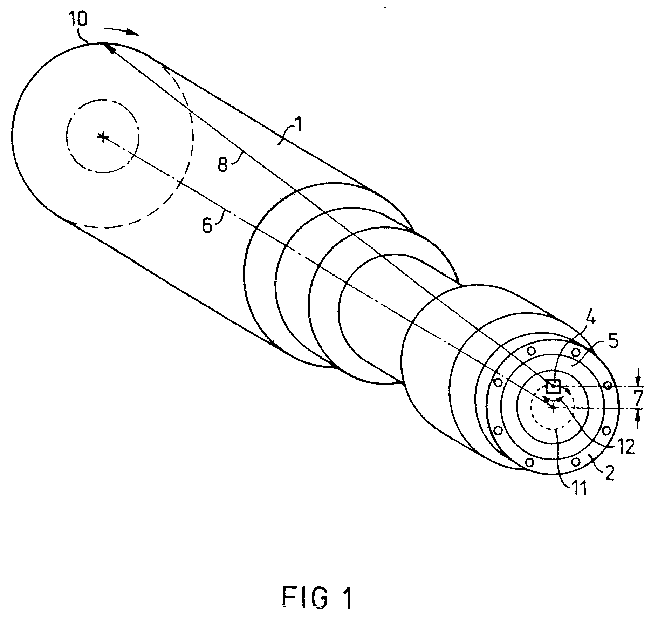

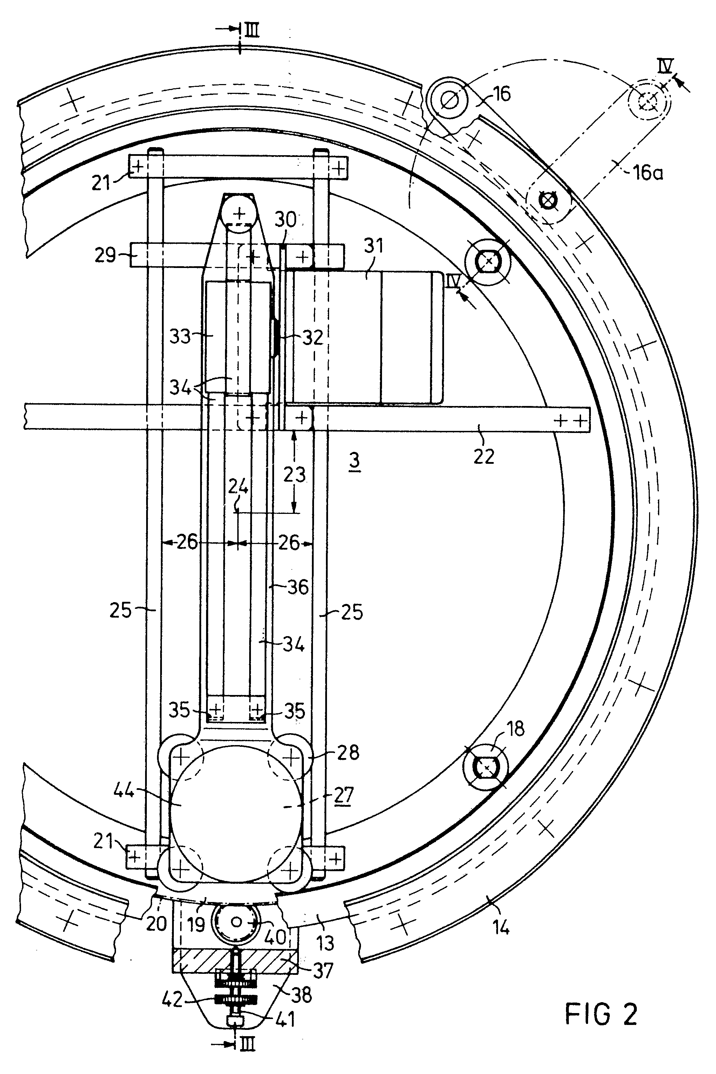

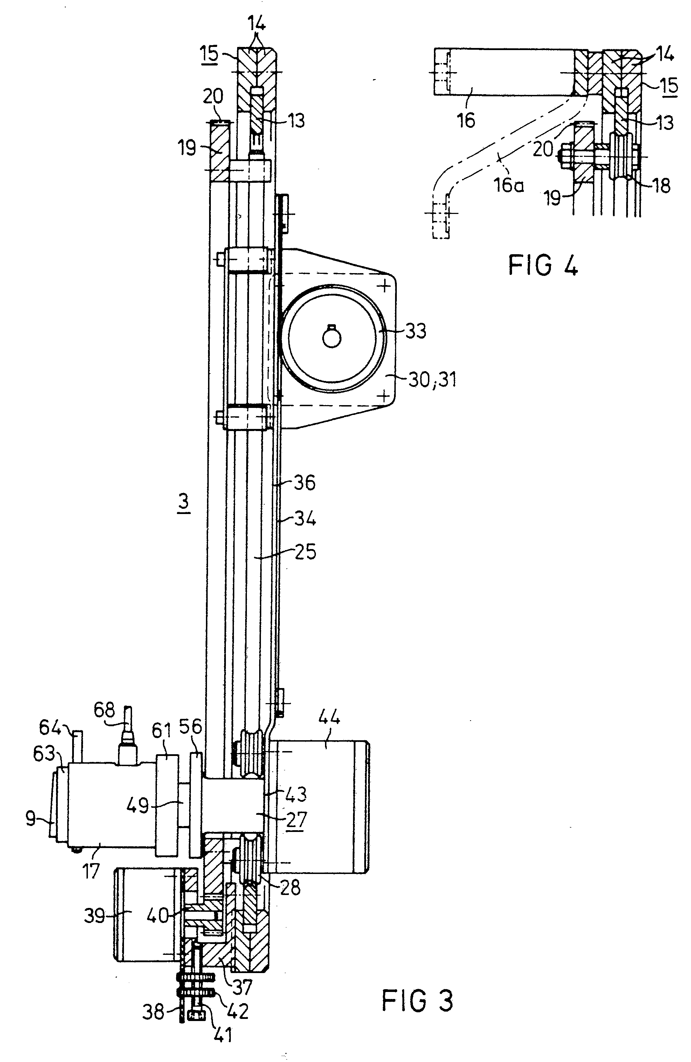

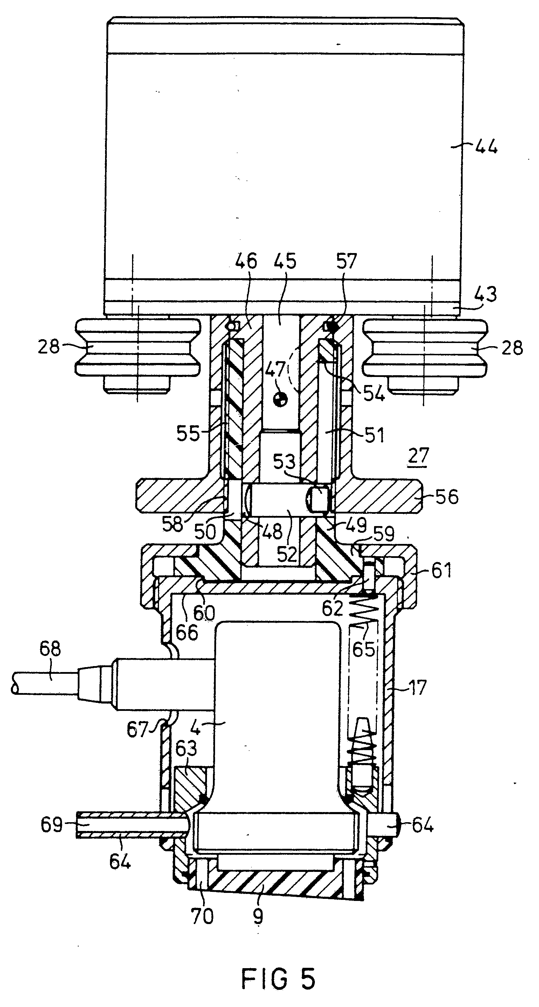

Im folgenden sei die Erfindung noch anhand der in den Figuren 1 bis 5 der Zeichnung näher erläutert. Figur 1 zeigt perspektivisch und schematisch dargestellt die halbe Welle einer Turbine mit einem auf der Stirnfläche angedeuteten Prüfkopf. In Figur 2 ist, teilweise geschnitten, die Aufsicht auf eine zur Durchführung des Verfahrens dienende Vorrichtung dargestellt. Figur 3 zeigt einen Schnitt entlang der Schnittlinie III-III und Figur 4 einen Schnitt entlang der Schnittlinie IV-IV jeweils in Figur 2. In Figur 5 ist mit vergrößerten Maßstab und weitergehend geschnitten eine Einzelheit aus Figur 3 dargestellt.

Turbinenwellen, insbesondere Niederdruckturbinenwellen haben im allgemeinen eine sehr große Länge (über 6 Meter) und sind für die Befestigung der Radscheiben mit verhältnismäßig viel Absätzen versehen, an denen sich, infolge der Kerbwirkung und der dynamischen Beanspruchungen, während des Betriebes Risse bilden können. Werden sie nicht rechtzeitig entdeckt, so können diese sich katastrophal auswirkende Brüche der Turbinenwellen zur Folge haben.

Für die Durchführung des erfindungsgemäßen Verfahrens zur Feststellung von Rissen mittels Ultraschall-Impulsechoverfahren ist es ausreichend, daß an der Welle 1 einer Turbine mindestens eine, insbesondere die generatorseitige Stirnfläche 2 frei zugänglich ist. Auf diese Stirnfläche wird dann mit Hilfe einer - in der Figur 1 nicht gezeigten, aber in den Figuren 2 - 5 dargestellten - Vorrichtung 3 der Prüfkopf 4 aufgesetzt. Dabei können die Bohrungen 5 in der Stirnfläche 2 zur Befestigung der Vorrichtung 3 ausgenutzt werden.

Der Prüfkopf 4 wird entsprechend dem Verfahren gemäß der Erfindung seitlich von der gestrichelt angedeuteten Mittelachse 6 der Welle 1 aufgesetzt, d. h. er weist zu der gestrichelt angedeuteten Mittelachse 6 der Welle 1 einen bestimmten radialen Abstand 7 auf. Der Prüfkopf 4 gibt Ultraschallimpulse hoher Frequenz im Bereich von 4 - 8 MHz ab. Diese bilden ein Schallbündel 8, das in Figur 1 nur durch einen Pfeil angedeutet ist. Dieses erreicht entsprechend der Neigung des Prüfkopfes zur Stirnfläche 2 der Welle 1, die durch die Verwendung eines Vorsatzkeiles 9 erzielt wird, dann nach einer gewissen Länge die äußere Mantelfläche 10 der Welle 1 der Turbine. Damit dieses Gebiet, in dem die Bildung von Rissen am meisten zu befürchten ist, gründlich überprüft werden kann, wird der Prüfkopf 4 entlang eines auf der Stirnfläche 2 gestrichelt angedeuteten Kreises 11 um die Mittelachse 6 bewegt. Neben diesem Freiheits grad kann der Prüfkopf 4, wie durch die Pfeile 12 angedeutet, auch um seine Achse bzw. die Achse des Vorsatzkeiles 9 gedreht werden.

Außerdem ist eine Bewegung des Prüfkopfes 4 entlang eines Durchmessers der Welle 1 möglich, indem der radiale Abstand 7 variiert wird. Dabei kann das Schallbündel 8 jeweils in verschiedenen Längenbereichen der Welle 1 der Turbine die äußere Mantelfläche 10 erfassen. Dieses Verfahren hat außerdem den Vorteil, daß der mittlere Bereich der Welle 1, der benachbart zur Mittelachse 6 liegt, von der Messung ausgeschlossen ist. Dieser könnte nämlich bei Schmiedeteilen, wie sie Turbinenwellen sind, die Messung nachteilig beeinflussen. Trifft nun das vom Prüfkopf 4 ausgesandte Schallbündel 8 auf einen Riß, so wird zumindest ein Teil des Ultraschalls reflektiert und zur Stirnfläche 2 zurückgeworfen. Dort erfaßt ein im Prüfkopf 4 enthaltener Schallempfänger die Echoimpulse und führt sie einer Auswerteeinrichtung zur Aufzeichnung zu.

Die Vorrichtung 3 zum Manipulieren des Prüfkopfes 4 während der Durchführung des Meßverfahrens enthält einen Führungsring 13, der in einem aus zwei Klemmringen 14 gebildeten Tragkörper 15 angeordnet ist. Der Tragkörper 15 weist weiterhin einstellbare, insbesondere schwenkbare, als Füße ausgebildete Befestigungsmittel 16 auf, über welche die Vorrichtung 3 in den Bohrungen 5 an der Stirnfläche 2 befestigt wird. Diese Befestigungsmittel 16 sind in der Figur 2 bzw. der Figur 4 dargestellt, wobei strichpunktiert Befestigungsmittel 16a in einer möglichen anderen Lage angedeutet sind. Die Befestigungsmittel 16 halten die Vorrichtung 3 in einem bestimmten axialen Abstand vor der Stirnfläche 2 der Welle 1, der genügend groß gewählt ist, damit der Prüfkopf 4, der sich mit dem Vorsatzkeil 9 im Prüfkopfhalter 17 befindet, ohne Behinderung gegenüber der Stirnfläche 2 bewegt, auf diese aufgesetzt und angekoppelt werden kann.

Infolge der Einstellbarkeit bzw. Schwenkbarkeit der Befestigungsmittel 16 ist der Durchmesser des Führungsringes 13 und somit die Vorrichtung 3 unabhängig vom gegebenen Durchmesser der Welle 1, so daß die Vorrichtung 3 in dem Maße, wie das Schallbündel 8 noch in der gewünschten Länge die äußere Mantelfläche 10 der Welle 1 erreichen kann, bei verschiedenen Wellendurchmessern einsetzbar ist. Mit Hilfe der Befestigungsmittel 16 wird der Führungsring 13 jeweils genau zentrisch zur Mittelachse 6 der Welle 1 ausgerichtet.

Auf der Innenfläche des Führungsringes 13 ist mit Hilfe von vier Rollen 18 ein zweiter Ring 19 gelagert, der seitlich neben dem Führungsring 13 liegt und eine Außenverzahnung 20 aufweist. Dieser zweite Ring 19 liegt also ebenfalls genau zentrisch zur Mittelachse 6 der Welle 1 und ist drehbar.

Auf diesem Ring 19 der Vorrichtung 3 sind mehrere parallel zueinander verlaufende Traversen befestigt, von denen zwei kurze Traversen 21 nahe dem Außenumfang des Ringes 19 liegen. Eine längere Traverse 22, liegt seitlich mit einem durch Pfeile angedeuteten Abstand 23 zum Mittelpunkt 24 der Ringe 13, 19 und somit der Vorrichtung 3. Dieser Mittelpunkt 24 liegt im eingebautem Zustand der Vorrichtung 3 auf der verlängerten Mittelachse 6 der Welle 1. Die Traversen 21, 22 tragen, senkrecht zu ihnen ausgerichtet, zwei parallel zueinander verlaufende Schienen 25. Jede Schiene 25 hat einen gleichen, durch Pfeile angedeuteten Abstand 26 zum Mittelpunkt 24 der Vorrichtung 3. Auf den Schienen 25 ist längsbeweglich ein Schlitten 27 angeordnet, der über seitliche Rollen 28 auf den Schienen 25 gleitet und von ihnen geführt ist. Dieser Schlitten 27 trägt den Prüfkopfhalter 17.

Zwischen einer kurzen Traverse 21 und der langen Traverse 22 ist auf einer Seite des Mittelpunktes 24 eine weitere Traverse 29 angeordnet, die auf einer Seite eine Grundplatte 30 trägt, die parallel zu eine Schiene 25 verläuft. Auf der Grundplatte 30 ist ein erster Stellmotor 31 befestigt, dessen Welle 32 die Grundplatte 30 durchsetzt und eine Trommel 33 antreibt, deren Nabe, ebenso wie die Welle 32 des Stellmotors 31, senkrecht zu den Schienen 25 verläuft. Die Trommel 33 dient zum Auf- und Abwickeln eines Bandes 34 aus Blech, wodurch die Bewegung des Schlittens 27 ausgelöst wird.

Das Band 34 hat die Form einer Stimmgabel bzw. einer zweizinkigen Gabel. Die beiden Enden 35 des Zinkenteils des Bandes 34 sind, zusammen mit einem Ende einer Leitschiene 36, mit dem Schlitten 27 verbunden. Diese Leitschiene 36 hat eine Länge, die zumindest der gewünschten Längsbewegung des Schlittens 27 entspricht. An ihrem anderen, dem Schlitten 27 abgewandten Ende der Leitschiene 36 ist das einteilige Ende des Bandes 34 befestigt. Das Band umschlingt die Trommel 33. Sein Mittelteil, d. h. der Übergang von den beiden Zinken zu dem einfachen Bandende ist in nicht dargestellter Weise auf der Trommel 33 festgelegt, wodurch das Auf- bzw. Abwickeln des Bandes 34 bei Drehung der Trommel 33 durch den Stellmotor 31 bewirkt wird. Durch die besondere Form des Bandes 34 wickelt sich dabei das einteilige Ende des Bandes 34 zwischen die beiden zinkenartigen Enden ungehindert auf oder ab.

Das Band 34 liegt mit einer gewissen Vorspannung auf der Trommel 33 an, wofür nicht dargestellte Spannmöglichkeiten vorgesehen sind, damit diese Vorspannung auch nachträglich, nach längerem Betrieb jederzeit neu eingestellt werden kann. Bei Drehung der Trommel 33 übt das Band 34 nun jeweils auf ein Ende der Leitschiene 36 eine Zugkraft aus, die dann, je nach der Drehrichtung der Trommel 33, entweder unmittelbar als Zugkraft auf den Schlitten 27 übertragen wird, oder, von der anderen Seite her, über die Leitschiene 36 als Druckkraft auf den Schlitten 27 einwirkt. Entsprechend wird der Schlitten 27 in die eine oder die andere Richtung bewegt. Diese Umsetzung der Drehbewegung, hervorgerufen durch den Stellmotor 31 und die Drehung der Trommel 33, in die Längsbewegung des Schlittens 27 ist völlig spielfrei und ist somit jederzeit wieder reproduzierbar.

Durch eine geeignete Formgebung der auf der anderen Seite des Mittelpunktes 24 liegenden kurzen Traverse 21 kann der Schlitten 27 so weit nach außen bewegt werden, daß der Prüfkopfhalter 17 direkt vor der Innenfläche des Ringes 19 zu liegen kommt. Somit kann sich der Schlitten 27 über eine Länge bewegen, die größer als der Radius des Ringes 19 ist. Dieser längsbewegbare Schlitten 27 ergibt den ersten Freiheitsgrad der Vorrichtung 3.

Der zweite Freiheitsgrad der Vorrichtung 3 liegt in der Drehbewegung des Ringes 19. Diese kann per Hand oder maschinell ausgelöst werden. Dazu ist am Tragkörper 15 des Führungsringes 13 ein Tragschuh 37 mit einer auf ihm verschiebbaren Grundplatte 38 für einen zweiten Stellmotor 39 befestigt. Das Ritzel 40 des Stellmotors 39 steht normalerweise in Eingriff mit der Außenverzahnung 20 des Ringes 19 und kann diesen drehen. Im Tragschuh 37 ist aber eine feststehende Schraube 41 vorgesehen, auf der zur Verstellung eine Rändelmutter 42 angebracht sind. Diese ragt in einen Schlitz der Grundplatte 38 hinein, so daß diese bei Drehung der Rändelmutter 42 so weit radial verschoben werden kann, daß das Ritzel 40 außer Eingriff zur Außenverzahnung 20 kommt und dann einer Drehung des Ringes 19 per Hand keinen Widerstand mehr entgegensetzt.

Auf dem Schlitten 27 ist der für die Durchführung des Ultraschall-Impulsechoverfahrens benötigte Prüfkopf 4 mit dem Prüfkopfhalter 17 so angeordnet, daß er auch den dritten Freiheitsgrad erhält, nämlich um die Achse des Prüfkopfhalters 17 drehbar ist. Dazu trägt die Grundplatte 43 des Schlittens 27 mit den Rollen 28 auf der einen Seite den dritten elektrischen Stellmotor 44, dessen Welle 45 senkrecht zur Ebene der Längsbewegung des Schlittens 27 steht und die Grundplatte 43 durchsetzt. Auf dieser Welle 45 ist eine erste Buchse 46 zentrisch und durch den Stift 47 gegen Verdrehung und Verschiebung gesichert angeordnet. Im unteren, über die Welle 45 hinausragenden Teil weist die Buchse 46 eine Durchgangsbohrung 48 auf.

Über die Buchse 46 ist mit Gleitsitz eine zweite Buchse 49 aus Isolierstoff z. B. Polyamid geschoben. Diese zweite Buchse 49 aus Isolierstoff weist auf der einen Seite eine Bohrung 50 auf, die mit der Durchgangsbohrung 48 in der Buchse 46 korrespondiert. In gleicher Höhe ist auf der entgegengesetzten Seite der Buche 49 eine Längsnut 51 vorgesehen, die aber sich nicht über die gesamte Höhe der Buchse 49 erstreckt. Durch die Bohrung 50 ist nun in die Durchgangsbohrung 48 ein Stift 52 eingeschoben, der mit seinem mit abgeflachten Flächen 53 versehenden Ende in die Längsnut 51 hineinragt. Dieser Stift 52 sichert somit die beiden Buchsen 46 und 49 gegen Verdrehung, ohne ihre gegenseitige Bewegung in axialer Richtung zu verhindern, die über die gesamte Länge der Längsnut 51 möglich ist. Die obere Begrenzungsfläche 54 der Längsnut 51 wirkt dabei als Anschlag, so daß infolge des Stiftes 52 auch verhindert ist, daß die Buchse 49 von der Buchse 46 abgedreht werden kann.

Zur Steuerung der Längsbewegung der beiden Buchsen 46, 49 gegeneinander ist die Buchse 49 aus Isolierstoff über einen gewissen Bereich mit einem Außengewinde 55 versehen, auf das eine Stellmutter 56 aufgeschraubt ist. Diese ist durch den Sprengring 57 axial festgelegt, bleibt aber drehbar. Die Stellmutter 56 ist lediglich über einen gewissen Teil ihres Innenumfanges mit einem Gewinde 58 versehen. Durch Drehung der sich in axialer Längsrichtung nicht verlagernden Stellmutter 56 wird dann die Buchse 49 aus Isolierstoff in Längsrichtung gegenüber der Buchse 46 bewegt.

Das untere Ende der Buchse 49 aus Isolierstoff weist einen Flansch 59 auf mit einem Zentrierrand 60. Dieser zentriert den topfartig ausgebildeten Prüfkopfhalter 17, der am Flansch 59 mit Hilfe einer Überwurfmutter 61 gehalten ist. Ein Stift 62 bildet eine Verdrehsicherung zwischen der Buchse 59 und dem Prüfkopfhalter 17. Alle Teile der Verbindung zwischen der Welle 45 des dritten Stellmotors 44 und dem Prüfkopfhalter 17 sind somit gegen Verdrehung gesichert.

Der topfartig ausgebildete Prüfkopfhalter 17 ist unten, d. h. auf der der Stirnfläche 2 der zu prüfenden Welle 1 zugewandten Seite mit einem Haltering 63 abgeschlossen. Dieser Haltering 63 umfaßt den Prüfkopf 4 und den Vorsatzkeil 9, wobei mehrere Stifte 64 eine Verdrehsicherung zwischen dem Haltering 63 und dem Prüfkopfhalter 17 bilden. Der Haltering 63 ist außerdem mit Federn 65 gegen die obere Stirnwand 66 des Prüfkopfhalters 17 abgestützt. Diese Federn 65 erzeugen eine gewisse Andruckkraft des Prüfkopfes 4 und des Vorsatzkeiles 9 auf die Stirnfläche 2 der zu prüfenden Welle 1. Der Prüfkopf 4 stellt sich beim Aufsetzen auf die Stirnfläche 2 entsprechend der Neigung des Vorsatzkeiles 9 schräg, so daß der von ihm ausgesandte Ultraschallimpuls schräg in die Stirnfläche 2 der zu prüfenden Welle 1 eingeschallt wird.

Der Prüfkopfhalter 17 ist seitlich mit einer Öffnung 67 versehen, durch die das Zuleitungskabel 68 für den Prüfkopf 4 geführt ist. Außerdem ist einer der Stifte 64 der Verdrehsicherung zwischen dem Haltering 63 und dem Prüfkopfhalter 17 mit einer Bohrung 69 versehen, durch die das für die Durchführung des Ultraschall-Impulsechoverfahren notwendige Ankoppelmittel in das Innere des Prüfkopfhalters 17 eingeleitet wird. Dieses wird dann über Bohrungen 70 zu der Ankoppelfläche des Vorsatzkeiles 9 auf der Stirnfläche 2 der zu prüfenden Welle 1 geleitet.

Die besondere konstruktive Gestaltung der Teile des Schlittens 27 mit dem dritten Stellmotor 44 ergibt den dritten Freiheitsgrad der Vorrichtung 3, nämlich die Drehung des Prüfkopfes 4 um die Achse des Prüfkopfhalters 17, die mit der Achse der Welle 45 des dritten Stellmotors 44 übereinstimmt. Durch diese Drehung wird der Prüfkopf 4 außerdem entsprechend der Neigung des Vorsatzkeiles 9 geschwenkt, so daß der eingeschallte Ultraschallstrahl sich auf der Mantelfläche eines Kegels verlagert.

Da die Befestigung des Prüfkopfhalters 17 gegenüber der Welle 45 des Stellmotors 44 längs verschiebbar ist, kann eine einfache Anspassung der Lage des Prüfkopfes 4 an die geometrischen Verhältnisse der Stirnfläche 2 der zu prüfenden Welle 1 erzielt werden, so daß der Prüfkopf 4 auch in Nutbereichen angekoppelt werden kann. Die Federn 65 garantieren außerdem in allen beliebigen Schräglagen des Prüfkopfes 4 im Innern des Prüfkopfhalters 17 einen ausreichenden Anpreßdruck. Außerdem hat die Halterung noch den Vorteil, daß durch die Verwendung der zweiten Buchse 49 aus Isolierstoff eine elektrische und magnetische Isolierung des Prüfkopfes 4 gegenüber der Vorrichtung 3 erzielt wird. Dadurch werden äußere Störeinflüsse von dem Prüfkopf 4 ferngehalten, die sonst kleine Echoimpulse überdecken würden. Dies ergibt den Vorteil, daß bereits kleine Anrisse erkannt werden können.

**Patentansprüche**

1. Verfahren zur Feststellung von Rissen in einer Welle (1) mittels Ultraschall-Impulsechoverfahren, bei dem der insbesondere mit einem Vorsatzkeil (9) versehene Prüfkopf (4) an der Stirnfläche (2) der Welle (1) angekoppelt ist, auf dieser bewegt wird, insbesondere mit Hilfe einer mechanischen Vorrichtung (3), und Ultraschallimpulse bestimmter Frequenz aussendet und bei dem weiterhin die reflektierten Schallechos von einem im Prüfkopf (4) enthaltenen Schallempfänger erfaßt und durch eine Aus-werteeinrichtung aufgezeichnet werden, **da-durch gekennzeichnet,** daß der Prüfkopf (4) Schallimpulse hoher Frequenz im Bereich von 4 - 8 MHz abgibt und mit Hilfe der zur Mittelachse (6) zentrierten mechanischen Vorrichtung (3) in einem radialen Abstand (7) zur Mittelachse (6) der Welle (1) aufgesetzt und im Verlauf der Messungen zumindest über einen Teil des Umfangs des durch den radialen Abstand (7) des Prüfkopfes (4) von der Mittelachse (6) definierten Kreises (11) verlagert wird.

2. Verfahren nach Anspruch 1, **dadurch gekennzeichnet,** daß der Prüfkopf (4) mit einem Vorsatzkeil (9) versehen ist und um die Achse des Prüfkopfhalters (17) gedreht wird.

3. Verfahren nach Anspruch 1 oder 2, **dadurch gekennzeichnet,** daß der radiale Abstand (7) des Prüfkopfes (4) zur Mittelachse (6) der Welle (1) mit Hilfe der Vorrichtung (3) variiert wird.

4. Verfahren nach einem der vorhergehenden Ansprüche, **dadurch gekennzeichnet,** daß die Vorrichtung (3) die Verlagerung des Prüfkopfes (4) längs eines Radius bzw. Durchmessers und längs eines Kreises (11) um die Mittelachse (6) unabhängig voneinander zuläßt.

5. Verfahren nach einem der vorhergehenden Ansprüche, **dadurch gekennzeichnet,** daß die Bewegungen des Prüfkopfes (4) in der Vorrichtung (3) durch Stellmotoren (31, 39, 44) ausgelöst werden.

6. Verfahren nach einem der vorhergehenden Ansprüche, **dadurch gekennzeichnet,** daß der Prüfkopf (4) an die generatorseitige Stirnfläche (2) einer Turbinenwelle (1) im eingebauten Zustand aufgesetzt wird.

7. Verfahren nach Anspruch 6, **dadurch gekennzeichnet,** daß die auf der Stirnfläche (2) der Welle (1) bzw. auf der Stirnfläche eines als Kupplungsflansch dienenden, auf der Welle (1) angeordneten Nabenkörpers vorhandenen Bohrungen (5) zur Aufnahme der Kupplungsbolzen zur Befestigung der Vorrichtung (3) ausgenutzt werden.

8. Vorrichtung zur Durchführung des Verfahrens nach Anspruch 1 oder einem oder mehreren der Ansprüche 2 bis 7, **dadurch gekennzeichnet,** daß auf einem Tragkörper (15) mit einstellbaren Befestigungsmitteln (16) zur Welle (1) ein Führungsring (13) angeordnet ist, in dem zentrisch und drehbar ein zweiter Ring (19) gelagert ist, der zwei in gleichem Abstand (23) zum Mittelpunkt (24) der Ringe (13, 19) liegende, zueinander parallel verlaufende Schienen (25) trägt, auf denen längsbeweglich ein Schlitten (27) angeordnet ist, der einen Prüfkopfhalter (17) mit dem darin liegenden, insbesondere mit einem Vorsatzkeil (9) versehenen Prüfkopf (4) trägt.

9. Vorrichtung nach Anspruch 8, **dadurch gekennzeichnet,** daß die Schienen (25) über Traversen (21, 22) an dem zweiten Ring (19) befestigt sind.

10. Vorrichtung nach Anspruch 8 oder 9, **dadurch gekennzeichnet,** daß der Schlitten (27) durch einen ersten Stellmotor (31) auf den Schienen (25) bewegt wird, der fest in der Vorrichtung (3) angeordnet ist.

11. Vorrichtung nach Anspruch 10, **dadurch gekennzeichnet,** daß der erste Stellmotor (31) eine Trommel (33) antreibt, auf der ein an der Trommel (33) befestigtes Band (34) auf- und abwickelbar ist, dessen Enden auf einer Leitschiene (36) festgelegt sind, die einseitig mit dem Schlitten (27) verbunden ist und deren Länge zumindest der gewünschten Längsbewegung des Schlittens (27) entspricht.

12. Vorrichtung nach Anspruch 11, **dadurch gekennzeichnet,** daß das Band (34) aus einem Blech in Form einer Stimmgabel besteht, deren äußere Enden an der Leitschiene (36) und deren Mittelteil an der Trommel (33) festgelegt ist.

13. Vorrichtung nach Anspruch 11, **dadurch gekennzeichnet,** daß eine Spannmöglichkeit für das Band (34) vorgesehen ist.

14. Vorrichtung nach Anspruch 8 und/oder einem oder mehreren der Ansprüche 10 bis 13, **dadurch gekennzeichnet,** daß der zweite Ring (19) eine Außenverzahnung (20) trägt und daß am Tragkörper (15) für den Führungsring (13) ein zweiter Stellmotor (39) befestigt ist, dessen Ritzel (40) mit der Außenverzahnung (20) in Eingriff steht.

15. Vorrichtung nach Anspruch 14, **dadurch gekennzeichnet,** daß die Befestigung des zweiten Stellmotors (39) eine radiale Verschiebung des Ritzels (40) gegenüber der Außenverzahnung (20) des zweiten Ringes (19) zuläßt.

16. Vorrichtung nach Anspruch 15, **dadurch gekennzeichnet,** daß der zweite Stellmotor (39) auf einer Grundplatte (38) angeordnet ist, die auf einem am Tragkörper (15) des Führungsringes (13) befestigten Tragschuh (37) gleitet, wobei die radiale Verschiebung durch die Rändelmutter (42) einer im Tragschuh (37) feststehend angeordneten Schraube (41) auslösbar ist.

17. Vorrichtung nach Anspruch 8 oder einem oder mehreren der Ansprüche 10 bis 16, **dadurch gekennzeichnet,** daß der Schlitten (27) auf der dem Prüfkopf (4) und Prüfkopfhalter (17) abgewandten Seite einen dritten Stellmotor (44) trägt, dessen Welle (45) den Schlitten (27) durchsetzt und daß der Prüfkopf (4) über den Prüfkopfhalter (17) zentriert und gegen Verdrehung gesichert auf dieser Welle (45) befestigt ist.

18. Vorrichtung nach Anspruch 17, **dadurch gekennzeichnet,** daß der Prüfkopfhalter (17) über einen Teil (49) aus elektrischen Isolierstoff auf der Welle (45) des dritten Stellmotors (44) befestigt ist.

19. Vorrichtung nach Anspruch 17 oder 18, **dadurch gekennzeichnet,** daß die Befestigung des Prüfkopfhalters (17) auf der Welle (45) des dritten Stellmotors (44) aus zwei aufeinander geschobene, zentrisch ausgerichtete Buchsen (46, 49) besteht, die gegeneinander in Längsrichtung verschiebbar sind, von denen die eine Buchse (46) fest mit der Welle (45) des dritten Stellmotors (44) verbunden ist und die andere Buchse (49) den Prüfkopfhalter (17) zentriert und trägt.

20. Vorichtung nach Anspruch 18 oder 19, **dadurch gekennzeichnet,** daß alle Teile der Verbindung zwischen der Welle (45) und dem Prüfkopfhalter (17) jeweils gegen Verdrehung gesichert sind.

21. Vorrichtung nach Anspruch 18 oder 19, **dadurch gekennzeichnet,** daß die den Prüfkopfhalter (17) tragende Buchse (49) aus Isolierstoff besteht und eine Längsnut (51) zur Aufnahme der Verdrehsicherung (52) zur anderen Buchse (46) enthält, deren obere Begrenzungsfläche (54) einen Anschlag für die Verdrehsicherung (52) bildet.

22. Vorrichtung nach Anspruch 19 oder 21, **dadurch gekennzeichnet,** daß die den Prüfkopfhalter (17) tragende Buchse (49) ein Außengewinde (55) trägt, auf dem eine Stellmutter (56) aufgeschraubt ist.

23. Vorrichtung nach Anspruch 18 oder 19 oder 20, **dadurch gekennzeichnet,** daß der Prüfkopfhalter (17) eine Bohrung (69) für die Zuführung eines Ankoppelmittels zur Aufsetzfläche des Prüfkopfes (4) bzw. des Vorsatzkeiles (9) aufweist.

EP 0 304 394 A2

FIG 1

EP 0 304 394 A2

FIG 2

FIG 4

FIG 3

FIG 5